(19) Europäisches Patentamt / European Patent Office / Office européen des brevets

(11) **EP 2 397 835 A1**

(12) **DEMANDE DE BREVET EUROPEEN**

(43) Date de publication:
**21.12.2011 Bulletin 2011/51**

(51) Int Cl.:
**G01N 5/04** *(2006.01)*

(21) Numéro de dépôt: **11169714.0**

(22) Date de dépôt: **14.06.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **16.06.2010 FR 1054771**

(71) Demandeur: **Institut National De L'environnement Industriel Et Des Risques**
**60550 Verneuil-en-Halatte (FR)**

(72) Inventeurs:
• **Kazmierczak, Jean-Bernard**
**60460 PRECY SUR OISE (FR)**
• **Maison, Tatiana**
**60810 VILLERS ST FRAMBOURG (FR)**
• **Dalalain, Patrice**
**60100 CREIL (FR)**
• **Laouafa, Farid**
**60500 CHANTILLY (FR)**

(74) Mandataire: **Intès, Didier Gérard André et al**
**Cabinet Beau de Loménie**
**158, rue de l'Université**
**75340 Paris Cedex 07 (FR)**

(54) **Dispositif et procédé de caractérisation d'un matériau**

(57) Dispositif (10) de caractérisation d'un matériau, le dispositif permettant de déterminer les variations de surface et/ou de volume d'un échantillon (48) du matériau en fonction de sa teneur en eau, et comprenant :
- une enceinte (12) ;
- des moyens (22) de régulation du taux d'humidité relative (RH) dans l'enceinte;
- un appareil (14) permettant la pesée de l'échantillon à l'intérieur de l'enceinte ;

- des moyens (16) d'acquisition d'informations relatives à l'échantillon ; et
- des moyens (20) de traitement de données, aptes à déterminer les variations de surface et/ou de volume de l'échantillon à partir des informations ainsi acquises.

Procédé de caractérisation d'un matériau, pouvant être mis en oeuvre dans le dispositif précité.

Ce dispositif et ce procédé permettent de caractériser un matériau en un temps relativement court.

FIG.1

EP 2 397 835 A1

## Description

L'invention concerne la caractérisation de matériaux susceptibles d'absorber de l'eau. Elle concerne plus particulièrement la caractérisation d'échantillons de sols, et notamment de sols argileux, mais peut être utilisée pour d'autres applications comme par exemple l'étude de l'absorption d'eau par des tissus biologiques, des produits alimentaires, etc.

L'humidification (ou hydratation) des sols par absorption d'eau est un phénomène connu. Il s'agit ici d'une absorption d'eau qui se produit dans toute la masse du matériau, et non seulement en surface.

Les conséquences de ce phénomène sur les bâtiments, les constructions, sont importantes. L'humidification s'accompagne en effet d'un gonflement du sol, le séchage (ou déshydratation) à l'inverse entrainant un phénomène de tassement ou retrait. Comme on peut se l'imaginer, le gonflement ou le retrait du sol, sous une construction, peut causer des dommages très importants sur celle-ci.

Une caractérisation précise des phénomènes de gonflement/retrait des sols, et notamment des sols argileux, permet d'évaluer les risques liés à ces phénomènes et ainsi de limiter les conséquences négatives qu'ils peuvent entrainer.

La caractérisation des sols argileux, de manière connue, peut se faire par une mesure du potentiel de gonflement et de retrait. Cette mesure consiste à provoquer le gonflement et respectivement le retrait d'un échantillon de sol, disposé dans un moule oedométrique (ou parfois en conditions isotropes), en mettant l'échantillon en contact avec de l'eau liquide pour l'imprégner d'eau, ou au contraire en le déshydratant en évacuant l'eau qu'il libère.

L'inconvénient principal de cette méthode est sa durée, souvent voisine de plusieurs semaines, cette durée étant due à la lenteur de la cinétique hydrique d'un échantillon d'argile, c'est-à-dire de la lenteur des échanges d'eau entre un échantillon d'argile et son environnement. Il s'ensuit que le recours à de tels essais est délicat, et par suite, ce type d'essais est peu pratiqué.

Un premier objectif de l'invention est de proposer un dispositif de caractérisation d'un matériau, permettant de déterminer les variations de surface et/ou de volume d'un échantillon du matériau en fonction de sa teneur en eau, dispositif permettant d'obtenir ces informations plus rapidement qu'avec les dispositifs connus, tout en conservant une fiabilité élevée.

On notera que dans ce document, le terme 'surface' et notamment les 'variations de surface' ne fait pas référence à l'état de surface, mais vise plutôt la surface occupée par l'échantillon (ou éventuellement une partie de l'échantillon) sur son support, exprimée par exemple en $mm^2$. Par ailleurs, la teneur en eau d'un échantillon de matériau désigne ici le rapport $M_{eau} / M_{sec}$, dans lequel $M_{eau}$ est la masse de l'eau contenue dans l'échantillon, et $M_{sec}$ la masse de l'échantillon après séchage.

Le premier objectif de l'invention est atteint grâce au fait que le dispositif comprend:

une enceinte;
des moyens de régulation du taux d'humidité relative dans l'enceinte ;
un appareil de pesage, permettant la pesée de l'échantillon à l'intérieur de l'enceinte ;
des moyens d'acquisition d'informations relatives à l'échantillon ; et
des moyens de traitement de données, aptes à déterminer des variations de surface et/ou de volume de l'échantillon à partir des informations ainsi acquises.

Il est apparu en effet que la solution la plus performante pour raccourcir la durée de l'essai consiste à réaliser celui-ci sur un échantillon de matériau de volume très faible, afin de réduire le temps mis par l'échantillon pour atteindre l'équilibre hydrique. L'équilibre hydrique se définit ici comme la situation dans laquelle l'échantillon n'échange plus d'eau avec son environnement.

Dans ce but, l'invention propose un dispositif comprenant notamment une enceinte, de type 'enceinte climatique', dans laquelle le taux d'humidité relative, ou degré d'hygrométrie, peut être régulé grâce aux moyens de régulation du taux d'humidité relative. Grâce à ceux-ci, simplement en régulant le taux d'humidité relative dans l'atmosphère environnant l'échantillon, on impose à l'échantillon de matériau une variation correspondante de sa teneur en eau (la teneur en eau restant habituellement différente du taux d'humidité relative). Ainsi, l'utilisation de l'enceinte climatique permet de faire varier de manière contrôlée la teneur en eau de l'échantillon.

Le système de pesage permet de déterminer les variations de masse de l'échantillon, et donc de mesurer à chaque étape la teneur en eau de l'échantillon.

En parallèle, à l'aide des moyens d'acquisition, on acquiert des informations qui sont traitées par les moyens de traitement de manière à déterminer les variations de surface et/ou de volume de l'échantillon.

Connaissant pour différentes valeurs de la teneur en eau, la variation de surface et/ou de volume correspondante, il est alors possible d'établir la courbe donnant les variations de surface et/ou de volume de l'échantillon, en fonction de sa teneur en eau.

Avantageusement, le dispositif selon l'invention permet de déterminer les variations de surface et/ou de volume de matériaux argileux, en fonction de leur teneur en eau, en moins de 24 heures habituellement (voire 48 heures dans certains cas), à comparer aux 10 à 20 jours des méthodes antérieures.

De plus, le dispositif permet si nécessaire d'obtenir une courbe continue, puisqu'il permet de faire varier sensiblement continûment (quoique par paliers en général) le taux d'humidité relative et par suite, la teneur en eau de l'échantillon.

Dans un mode de réalisation préféré, l'appareil présente une incertitude de mesure, pour la mesure de masses, inférieure à 10 mg, voire 2 mg.

Une telle sensibilité est adaptée pour la pesée de masses de l'ordre de 100 à 300 mg notamment. Cette taille reste suffisante pour que l'échantillon soit manipulable relativement facilement, et que le risque de pollution de l'échantillon au cours de la manipulation reste faible.

Pour la détermination des variations de volume de l'échantillon, dans un mode de réalisation les moyens de traitement de données comportent des moyens pour évaluer une variation de surface de l'échantillon, et des moyens pour déterminer une variation de volume de l'échantillon à partir de sa variation de surface.

Ainsi, les moyens de traitement permettent d'abord de déterminer les variations de surface de la partie d'échantillon étudiée, c'est-à-dire les variations de la surface que celle-ci occupe sur le porte-échantillon, déterminée à partir des images fournies par le microscope, lors des différents paliers de taux d'humidité relative. La surface occupée par la partie d'échantillon étudiée est calculée par exemple en mm$^2$ ou $\mu$m$^2$. En première approximation, cette surface peut être considérée comme proportionnelle au nombre de pixels qu'elle occupe dans l'image du microscope.

Ensuite, sur la base d'hypothèses faites sur la relation entre la surface de la partie d'échantillon étudiée et son volume, on détermine les variations de volume de la partie d'échantillon étudiée (Ce point sera détaillé par la suite).

Dans un mode de réalisation, le microscope est un microscope électronique à balayage. Ce type de microscope présente une résolution extrêmement fine et est adapté pour produire des images notamment d'échantillons d'une longueur de quelques dizaines de $\mu$m, ce qui permet d'avoir un champ d'observations dans lequel n'apparaissent que quelques agrégats, dans le cas où le matériau est un matériau argileux. De préférence, pour réaliser les mesures on sélectionne au sein de l'échantillon placé dans l'enceinte climatique un ou quelques agrégats isolés, et se détachant nettement des autres agrégats avoisinants. Grâce à cela, les informations acquises sur ces agrégats sont plus facilement exploitables (les risques de confusion avec des agrégats voisins étant réduits), ce qui permet une détermination précise des variations de surface et/ou de volume des agrégats examinés et par extension, de l'échantillon.

Le microscope permet l'acquisition d'images de l'échantillon, qui sont transmises aux moyens de traitement pour détermination des variations de surface et/ou de volume de l'échantillon à partir des images.

De préférence, le microscope est un microscope à balayage électronique. Cette technologie de microscopie est apte en effet à fournir des images de très haute résolution, qui peuvent être nécessaires pour atteindre la précision attendue du dispositif. En particulier, un microscope électronique à balayage spécialement conçu pour fonctionner avec une enceinte climatique (dans laquelle le taux d'humidité relative est contrôlé), c'est-à-dire un microscope électronique à balayage environnemental peut être utilisé. Un tel microscope électronique est particulièrement adapté pour réaliser un dispositif selon l'invention.

D'autres moyens d'acquisition d'informations qu'un microscope à balayage électronique peuvent être utilisés pour déterminer les variations de volume de l'échantillon.

Par exemple, l'échantillon peut être disposé dans un moule cylindrique poreux, d'axe vertical. Dans ce mode de réalisation, les moyens d'acquisition d'informations comportent principalement un distancemètre, qui mesure les variations de hauteur de la surface supérieure de l'échantillon.

Dans un autre mode de réalisation, la détermination des variations de surface et/ou de volume de l'échantillon est faite à l'aide d'un système d'imagerie 3D ou scanner 3D. Un tel système peut être réalisé par exemple à l'aide d'un distancemètre (par exemple, par conoscopie holographique), agencé pour mesurer la position suivant l'axe vertical d'un point de la surface de l'échantillon, couplé à une table ou platine à deux axes XY sur laquelle est fixé l'échantillon.

Pour chaque valeur étudiée du taux d'humidité relative dans l'enceinte, un ensemble de points couvrant la surface de l'échantillon est mesuré en déplaçant l'échantillon dans le plan horizontal, et en mesurant en chaque point la position suivant l'axe vertical de la surface de l'échantillon. Un nuage de points 3D est ainsi constitué et permet de déterminer le volume (et par suite les variations de surface et/ou de volume) de l'échantillon.

Lorsque les moyens d'acquisition sont principalement un microscope, dans un mode de réalisation, la zone d'observation du microscope n'inclut qu'une fraction de l'échantillon par exemple moins d'un cinquième de l'échantillon.

Ce mode de réalisation peut être choisi notamment, mais pas exclusivement, lorsque le traitement des images comprend une étape dans laquelle on détermine les déformations surfaciques de l'échantillon.

Dans ce cas, et pour certains matériaux notamment les sols argileux, il est difficile de déterminer avec précision la déformation surfacique de l'échantillon si ce dernier est trop volumineux. Lorsque le volume de l'échantillon dépasse quelques dizaines de millimètres cube, l'échantillon forme un amas informe ; la détermination de la déformation surfacique de celui-ci devient difficile et donc imprécise. A l'inverse, le choix d'une partie d'échantillon de faibles dimensions, par exemple de diamètre inférieur à 100 $\mu$m environ, permet d'obtenir une meilleure précision dans la détermination des déformations surfaciques. Une telle partie d'échantillon ne comprend en effet qu'un ou quelques agrégats d'argile ; l'étude de leurs déformations dans les images est facilitée par rapport au cas précédent d'un échantillon plus volumineux (de l'ordre de plusieurs mm$^3$, par exemple).

Par ailleurs, et inversement, si l'échantillon est trop petit, il est difficile de mesurer sa masse ou ses variations de masse avec précision; en outre, sa manipulation peut être plus délicate.

Pour combiner ces deux contraintes, il peut être judicieux d'utiliser un échantillon d'une taille suffisante pour être pesé avec précision (compte-tenu du système de pesage utilisé), mais de n'évaluer les déformations surfaciques que sur une petite partie de l'échantillon. Naturellement, il convient de s'assurer que les déformations de la partie d'échantillon étudiée sont représentatives de celles de l'ensemble de l'échantillon et finalement du matériau. Dans ce cas, on peut n'utiliser qu'une partie de l'échantillon pour évaluer les variations de surface et/ou de volume de l'échantillon et par suite, les images acquises par le microscope peuvent ne viser qu'une fraction de l'échantillon.

Dans cette fraction de l'échantillon, on sélectionne de préférence une partie facilement identifiable. Les variations de surface et/ou de volume de cette partie d'échantillon sont déterminées dans les différentes images, la partie d'échantillon étudiée restant la même tout au long de l'essai.

Dans un mode de réalisation, le dispositif comporte en outre un système de régulation de la température. Ce système est piloté sur la base d'informations fournies par au moins un capteur de température, disposé en général au voisinage de l'échantillon. Il peut permettre d'éviter des variations de température en cours d'essai, qui seraient susceptibles de fausser les résultats.

En particulier, un système de régulation à la fois de la température et de la pression peut être utilisé comme moyen de régulation du taux d'humidité relative dans l'enceinte. En effet, le taux d'humidité relative est directement fonction des paramètres de pression et de température. Aussi, le pilotage de ces deux paramètres suffit pour imposer ou réguler (en présence d'eau), le taux d'humidité relative dans l'enceinte. Les moyens de régulation de pression peuvent comporter des moyens d'injection de vapeur d'eau dans l'enceinte, ce qui assure la présence d'eau dans celle-ci.

Dans un mode de réalisation, l'enceinte est apte à fonctionner sous très faible pression, à savoir à une pression inférieure à 5000 Pa, voire 2000 Pa.

En effet, les inventeurs ont noté que pour de nombreux échantillons notamment de sol, l'hypothèse peut être faite que, compte tenu de la pression de gonflement qu'est en mesure de développer le matériau étudié, les variations de surface et/ou de volume de l'échantillon de matériau en fonction de sa teneur en eau peuvent être supposées similaires aussi bien pour des pressions très basses (comme celles requises dans l'enceinte d'un microscope électronique à balayage environnemental), que pour celles constatées dans l'atmosphère et jusqu'à quelques mètres de profondeur dans le sol.

Ils ont observé également que l'absorption d'eau à pression faible ne diffère pas non plus de l'absorption d'eau à pression plus élevée, le seul paramètre important étant le taux d'humidité relative dans l'atmosphère environnant l'échantillon.

Aussi, avantageusement il est possible de réaliser les mesures de caractérisation de l'échantillon sous une pression très faible. Une telle pression peut être requise en particulier lorsqu'un microscope électronique à balayage est utilisé.

Un deuxième objectif de l'invention est de proposer un procédé de caractérisation d'un matériau, permettant de déterminer les variations de volume d'un échantillon du matériau en fonction de sa teneur en eau, plus rapidement que les procédés connus, tout en présentant une fiabilité élevée.

Cet objectif est atteint grâce au fait que le procédé comporte les étapes suivantes :

- on dispose l'échantillon dans une enceinte à l'intérieur de laquelle le taux d'humidité relative peut être commandé ;
- on fait varier le taux d'humidité relative à l'intérieur de l'enceinte;
- au cours de ces variations, on pèse l'échantillon et on détermine ses variations de surface ou de volume en exploitant des informations relatives à l'échantillon fournies par un microscope.

De préférence, on utilise un échantillon dont la masse après séchage est inférieure à 300 mg, voire 150 mg.

Dans un mode de réalisation, le taux d'humidité relative est régulé en maintenant la température constante au voisinage de l'échantillon, et en faisant varier la pression dans l'enceinte. Dans ces conditions, les variations de pression imposent des variations correspondantes du taux d'humidité relative dans l'enceinte.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

- la figure 1 est une vue schématique d'un dispositif selon l'invention ;
- la figure 2 est un diagramme représentant les valeurs du taux d'humidité relative, lors de paliers effectués lors de la mise en oeuvre du procédé selon l'invention ;
- la figure 3 est un diagramme représentant les variations de teneur en eau de l'échantillon lors des paliers présentés en figure 2 ;
- la figure 4 est un diagramme représentant les variations de teneur en eau de l'échantillon en fonction du taux d'humidité relative ;
- la figure 5 est un diagramme représentant les déformations surfaciques d'une portion d'échantillon, en fonction du taux d'humidité relative ; et
- la figure 6 est un diagramme représentant les déformations surfaciques, en fonction de la teneur en eau de l'échantillon ;

- les figures 7A et 7B sont deux schémas représentatifs d'images fournies par microscope, faisant apparaître le gonflement d'une partie d'échantillon lors de la mise en oeuvre du procédé.

DISPOSITIF DE CARACTERISATION

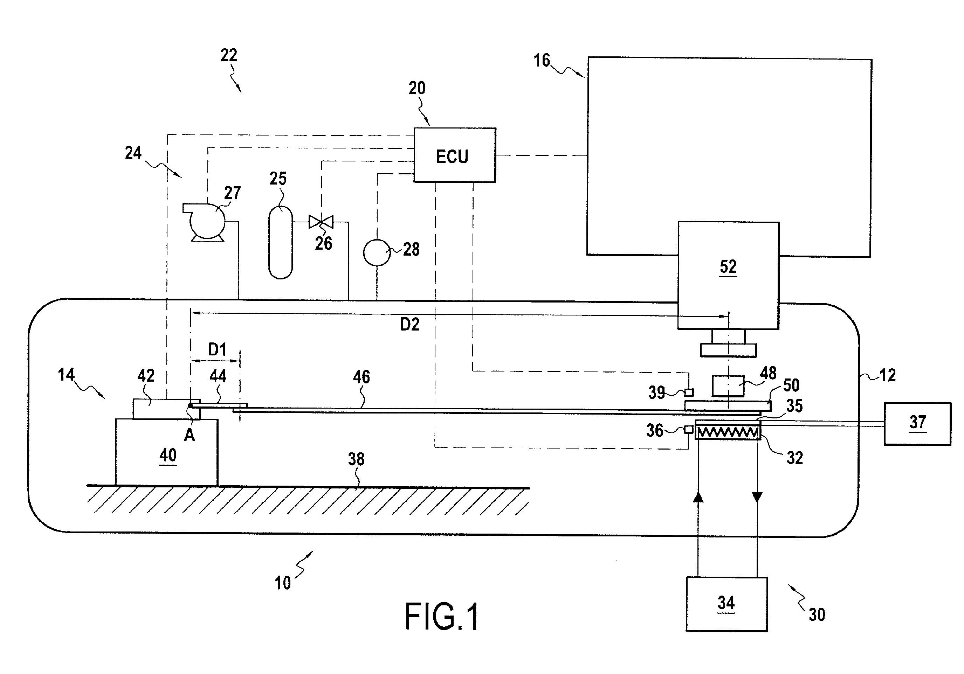

La figure 1 représente un dispositif de caractérisation de matériau 10 selon l'invention. Celui-ci comprend une enceinte 12, un appareil de pesage 14, un microscope électronique à balayage 16 ; et des moyens de traitement de données 20, comportant essentiellement une unité de traitement informatique de type micro-ordinateur.

L'enceinte 12 est une enceinte climatique, en pratique couplée au microscope électronique à balayage 16 qui est ainsi de type 'environnemental'. Le dispositif 10 comporte divers moyens de régulation.

Le dispositif 10 comporte tout d'abord des moyens 22 de régulation du taux d'humidité relative RH dans l'enceinte. Cette régulation est réalisée en imposant dans l'enceinte une pression et une température choisies. A partir de celles-ci, au moyen d'abaques, on détermine immédiatement le taux d'humidité relative.

La pression est régulée par des moyens 24 de régulation de pression. Ceux-ci comportent d'une part une capacité sous pression 25, qui est reliée ou isolée de l'enceinte 12 par une valve 26 pilotée à l'unité de traitement 20, et permet d'injecter un gaz neutre (de l'azote) dans l'enceinte. Ces moyens 24 comportent également une pompe 27, apte à pomper du gaz contenu dans l'enceinte, pour l'éjecter hors de l'enceinte. Les moyens 24 comportent enfin un capteur de pression 28.

L'information de pression dans l'enceinte 12 mesurée par le capteur 28 est transmise aux moyens de traitement 20. Inversement, les moyens de traitement sont reliés à la valve 26 et à la pompe 27, auxquels ils peuvent transmettre respectivement une consigne d'ouverture/fermeture et une consigne de fonctionnement. Les moyens 24 permettent ainsi de réguler la pression dans l'enceinte 12.

Le dispositif 10 comporte en outre un système 30 de régulation de la température. Ce système de régulation de la température comporte un circuit d'évacuation de la chaleur par fluide caloporteur, et un module de transfert de calories par effet Peltier.

Le circuit d'évacuation de chaleur comporte un échangeur de chaleur 32, disposé dans l'enceinte au voisinage d'un échantillon 48 dont le matériau doit être caractérisé. Cet échangeur 32 permet de capter de la chaleur au voisinage de l'échantillon 48 afin de l'évacuer hors de l'enceinte. Le fluide caloporteur, réchauffé lors de son passage à travers cet échangeur, est transféré dans un bloc de refroidissement 34, duquel il ressort refroidi.

D'autre part, le système 30 de régulation de la température comporte un module Peltier, c'est-à-dire, un module utilisant l'effet Peltier pour réduire ou élever la température dans une zone. Ce module est constitué par un plateau 35 d'évacuation de calories par effet Peltier, dit 'module Peltier'. Celui-ci est relié à une alimentation électrique 37 externe à l'enceinte 12. Le plateau 35 sert à faciliter l'évacuation de la chaleur dégagée par l'échantillon 48, et à diriger celle-ci vers l'échangeur de chaleur 32. Dans ce but, le plateau Peltier 35 est fixé sur la surface supérieure de l'échangeur de chaleur 32 ; il absorbe les calories sur sa face supérieure, et les libère au sein de l'échangeur de chaleur 32, sur sa face inférieure.

Si nécessaire, le module Peltier peut aussi être agencé de manière à pouvoir élever la température au voisinage de l'échantillon.

Enfin, la température est mesurée par un premier capteur de température 36, disposé à proximité de l'échangeur thermique 32, et par un second capteur de température 39, disposé à proximité de l'échantillon mesuré. Ces deux capteurs sont reliés à l'unité de traitement 20.

Au moyen du module Peltier 35 et du circuit d'évacuation de chaleur, et sur la base des informations fournies par les capteurs de température 36 et 39, l'unité 20 est apte à réguler la température au voisinage de l'échantillon.

L'enceinte 12 est formée avec une ouverture non représentée permettant la mise en place et le retrait des différents composants disposés dans l'enceinte.

A l'intérieur de l'enceinte 12 se trouve en particulier une platine 38, sur laquelle est fixé l'appareil de pesage 14 au sommet d'un support 40. L'appareil de pesage 14 est ainsi disposé à l'intérieur de l'enceinte.

L'appareil de pesage 14 est constitué principalement par un capteur de force 42 miniature. Ce capteur présente une micropoutre 44, à l'extrémité de laquelle doit être appliquée la force à mesurer.

Le capteur de force utilisé, bien qu'étant commercialisé en tant que capteur de force, est en réalité un capteur de couple, utilisant des jauges de déformations dont il détecte les déformations. En fonction des déformations détectées, ce capteur détermine un couple, à savoir le couple résultant de l'application de la force à mesurer à l'extrémité de la micropoutre 44.

Dans le dispositif 10, ce capteur 42 est utilisé en tant que capteur de couple. Plus particulièrement, il est utilisé ainsi car cela permet une démultiplication de la sensibilité, grâce à l'emploi d'un bras prolongateur 46.

Le coefficient démultiplicateur peut dans certains cas être approximé par le ratio D2/D1, dans lequel D1 et D2 désigne la distance entre le point A de mesure du couple et le point d'application de la force mesurée par le capteur 42, respectivement sans et avec le bras prolongateur 46.

La sensibilité peut être augmentée d'un facteur considérable, par exemple 30. Ainsi, le capteur de force 42 couplé au bras 46 constitue un appareil de pesage 14 apte à peser des masses très réduites, utilisable en particulier dans la plage 0-160 mg avec une incertitude de mesure inférieure à 1 mg.

L'échantillon 48 à mesurer est un échantillon de sol argileux (naturellement, le dispositif ou le procédé selon l'invention peuvent être mis en oeuvre avec tout type de matériau). Cet échantillon peut indifféremment être en pâte, en bloc, ou en poudre.

L'échantillon 48 est de préférence un échantillon dont le volume est de l'ordre de 30 à 50 mm3, ayant une épaisseur de 1 à 2 mm. Ces faibles dimensions sont compatibles avec la plage de mesure de l'appareil de pesage 14.

Pendant les mesures, l'échantillon 48 est fixé à l'extrémité du bras 46 de l'appareil de pesage 14, le bras 46 étant relié au dispositif de mesure de couple 42 (le capteur de force 42). Dans ce but, l'extrémité du bras 46 comporte un plateau porte-échantillon 50, sur lequel est placé l'échantillon 48. De préférence, le dispositif 10 est prévu pour que l'échantillon soit fixé uniquement à l'appareil de pesage, sans contact ni liaison avec d'autres équipements. L'échantillon, le plateau porte-échantillon et le bras 46 sont sans contact avec d'autres composants du dispositif (hormis le capteur de force 42), ce qui évite de perturber la mesure de masse. En particulier, le module Peltier 35 est disposé juste sous le plateau porte-échantillon 50 à l'extrémité du bras 46, de manière à évacuer les calories du plateau porte-échantillon le plus efficacement possible, mais à une distance suffisante pour éviter tout contact avec l'extrémité du bras 46.

L'appareil de pesage 14 permet de mesurer la masse de l'échantillon 48 posé sur le plateau 50. Avantageusement, cette mesure peut être réalisée en continu, ou plus précisément, périodiquement, par exemple toutes les 15 secondes. Les mesures sont transmises à l'unité de traitement 20 à laquelle l'appareil de pesage est relié.

Enfin, le dispositif de caractérisation de matériaux 10 comporte un microscope électronique à balayage 16. Celui-ci est de type environnemental, c'est-à-dire qu'il est couplé avec l'enceinte environnementale 12 de manière à permettre l'acquisition d'images d'objets situés à l'intérieur de l'enceinte 12.

Pour permettre l'utilisation du microscope électronique 16, l'enceinte est régulée en pression par les moyens 24 de régulation de pression à une pression inférieure à 2000 Pa.

Le détecteur 52 du microscope 16, couplé à une colonne électronique est dirigé vers l'échantillon 48 placé sur le plateau porte-échantillon 50. Il est focalisé seulement sur une partie de l'échantillon 48. Cette partie est de préférence de faible épaisseur, et séparée du reste de l'échantillon, de telle manière que son contour extérieur puisse être précisément déterminé dans les différentes images acquises par le microscope 16.

Une fois acquises, ces images sont transmises à l'unité de traitement 20. Celle-ci met en oeuvre des algorithmes permettant de déterminer la variation de volume de l'échantillon, à partir de ses variations de surface apparente, telles qu'elles apparaissent dans les images acquises par le microscope.

Un exemple de traitement informatique va être détaillé dans la description, qui suit, d'un mode de mise en oeuvre du procédé selon l'invention.

## MISE EN OEUVRE DU PROCEDE

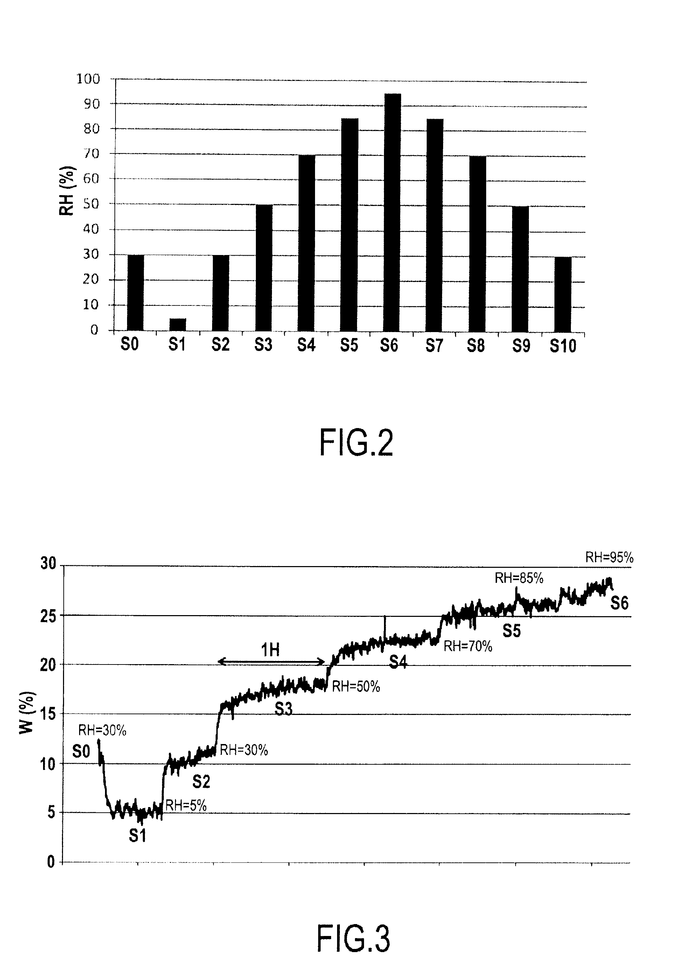

Le procédé de caractérisation selon l'invention va maintenant être présenté en relation avec les figures 2 à 7B.

Divers protocoles de mesure peuvent être suivis. De manière générale, pour obtenir une connaissance relativement complète du comportement du matériau en fonction de sa teneur en eau, on opère un séchage de l'échantillon, suivi ou précédé par une humidification. Il est nécessaire de réaliser ces deux phases, car le processus d'humidification des argiles (ou d'autres matériaux) peut présenter une hystéresis. Ainsi, on peut choisir en particulier :

a) de porter le taux d'humidité relative au voisinage de 0%, puis de réaliser une humidification complète suivie d'un séchage complet de l'échantillon ; ou inversement,

b) de porter le taux d'humidité relative au voisinage de 100%, puis de réaliser un séchage complet suivie d'une réhumidification complète de l'échantillon.

Naturellement lors de ces phases, il n'est pas impératif de procéder à un séchage ou une humidification réellement complets : il suffit en général de faire varier la teneur en eau du matériau dans l'ensemble de la plage de valeurs réellement observées pour le matériau étudié.

En préalable, avant de procéder aux mesures réalisées en enceinte climatique, on commence par déterminer la teneur en eau ($W_0$) du matériau à caractériser dans l'état initial, c'est-à-dire au taux d'humidité relative du laboratoire, et au moment des mesures.

Pour ce faire, on place un échantillon du matériau en étuve pendant un temps suffisant pour obtenir un séchage complet, par exemple 24 heures à 105°C ; on pèse alors l'échantillon. Ensuite, on place l'échantillon dans le laboratoire pendant un temps suffisant pour qu'il atteigne l'équilibre hydrique avec le laboratoire ; on le pèse alors à nouveau, et l'on mesure le taux d'humidité relative ambiant. Cela permet donc d'obtenir de manière précise la teneur en eau $W_0$ correspondant au taux d'humidité relative du laboratoire.

Après cette étape préalable (optionnelle), on procède alors aux mesures en enceinte climatique. La figure 2 présente ainsi les étapes suivies dans un mode de mise en oeuvre dans lequel après un séchage initial est réalisée une phase d'humidification suivie d'une phase de séchage. Le taux d'humidité relative RH (piloté par les moyens 22 de régulation du taux d'humidité relative dans l'enceinte 12) ne varie pas continûment, mais est modifié par paliers (S0 à S10).

Pour chaque palier, les mesures de poids sont réalisées en continu; cependant, les mesures considérées comme représentatives de l'état de l'échantillon à un taux d'humidité relative donné (mesure de poids et acquisition d'informations sur l'échantillon) sont celles qui sont effectuées lorsque l'échantillon a atteint l'équilibre hydrique avec l'atmosphère environnante.

Pour commencer la série de mesures, on dispose un échantillon 48 dans l'enceinte 12. Cet échantillon (en général différent de celui utilisé pour déterminer $W_0$) présente une teneur en eau $W_0$ qui correspond à l'humidité relative dans le laboratoire d'essai.

On mesure alors la masse $M_0$ de cet échantillon. On ferme l'enceinte, et on porte l'humidité relative dans celle-ci à un taux égal à celui régnant dans le laboratoire d'essai. Aussi, dans cette étape initiale (et donc notamment, avant le séchage ou l'humidification), on place l'échantillon 48 à un taux d'humidité relative égal à celui régnant dans la pièce dans laquelle a lieu l'essai. Cette disposition permet de réduire la perturbation physique subie par l'échantillon en début d'essai, et ainsi d'augmenter la représentativité des résultats obtenus. Elle permet de plus d'utiliser une valeur précise pour la masse à sec de l'échantillon placé dans l'enceinte, qui se déduit immédiatement de la mesure de masse initiale $M_0$, la teneur en eau $W_0$ étant connue. Comme solution alternative, la masse à sec de l'échantillon peut également être mesurée en effectuant un séchage complet de l'échantillon placé dans l'enceinte.

La figure 2 présente la succession des différents paliers observés.

L'étape S0 correspond à l'étape initiale indiquée précédemment, au cours de laquelle le taux d'humidité relative dans l'enceinte est amené à la même valeur que dans le laboratoire d'essai dans lequel se trouve le dispositif 10.

L'étape S1 correspond à une étape de séchage, au cours de laquelle le taux d'humidité relative est abaissé à environ 5%.

Ensuite, les moyens 22 de régulation du taux d'humidité relative imposent cinq paliers S2-S6 d'humidification, au cours desquels le taux d'humidité relative RH varie de 5% à environ 100%, suivis par quatre paliers de séchage S7-S10, au cours desquels le taux d'humidité relative RH est ramené jusqu'au taux d'humidité relative appliqué en début d'essai et égal à celui régnant dans le laboratoire d'essais, soit dans le cas présent, 30%.

Pour réguler le taux d'humidité relative dans l'enceinte, on conserve au voisinage de l'échantillon une température sensiblement constante, de l'ordre de 10°C à 20°C, et on fait varier la pression, ce qui entraine une modification du taux d'humidité relative.

De préférence, la durée des paliers est suffisante pour permettre une stabilisation de la masse de l'échantillon (lors de chaque palier). En effet lorsque l'échantillon atteint l'équilibre hydrique, sa masse et par conséquent sa teneur en eau W se stabilisent, en fonction de l'humidité relative régnant dans l'enceinte.

En pratique, la durée des paliers doit généralement être adaptée en fonction du comportement de l'échantillon. Dans l'exemple présenté, la durée des paliers est d'environ une heure.

La figure 3 présente les variations de la teneur en eau W, telle que mesurée (à partir des pesées), en fonction du temps. L'axe des temps est figuré en abscisse et seulement les étapes S0 à S6 sont représentées. L'indication '1H' correspond à une durée d'essai de 1 heure. En ordonnée est représentée la teneur en eau W, qui est calculée de manière connue à partir de la variation de poids de l'échantillon, telle que mesurée par l'appareil de pesage 14.

Les résultats de mesure obtenus quant aux variations de la teneur en eau en fonction du temps, au cours de paliers correspondant à des taux d'humidité relative connus S1-S10, sont alors traduits sous forme d'une courbe donnant l'évolution de la teneur en eau W en fonction du taux d'humidité relative RH.

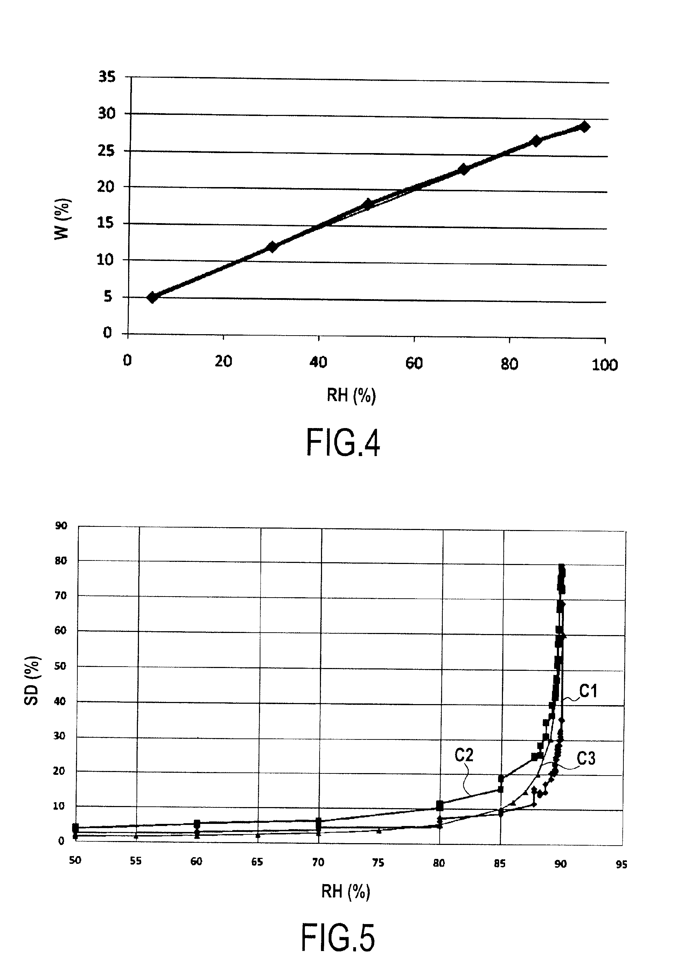

Cette courbe est donnée en figure 4 (en trait fort), du moins la partie de la courbe correspondant à l'humidification de l'échantillon, lorsque le taux d'humidité RH augmente. En trait fin, une courbe d'interpolation entre les différents points de mesure est également représentée.

Simultanément aux mesures de masse, et donc de teneur en eau de l'échantillon, pendant les différents paliers S0 à S10, sont réalisées des acquisitions d'images par le microscope électronique 16.

Ces acquisitions permettent d'obtenir des images, à partir desquelles les déformations surfaciques de l'échantillon - ou plutôt, d'une fraction de l'échantillon - sont déterminées.

A partir de ces déformations surfaciques, on détermine les variations du volume, c'est-à-dire selon le cas le gonflement ou le retrait, de l'échantillon.

La figure 5 représente les courbes de variation de la déformation surfacique SD (en ordonnée), en fonction du taux RH d'humidité relative (en abscisse). Trois courbes sont figurées : La courbe de gonflement C1, lors de l'humidification de l'échantillon ; la courbe de retrait C2, lors du séchage de l'échantillon, et enfin une courbe moyenne C3 qui constitue une approximation des deux courbes précédentes par une relation du type :

SD = A/(B-RH), dans laquelle A et B sont des paramètres. (Il existe de nombreuses autres possibilités).

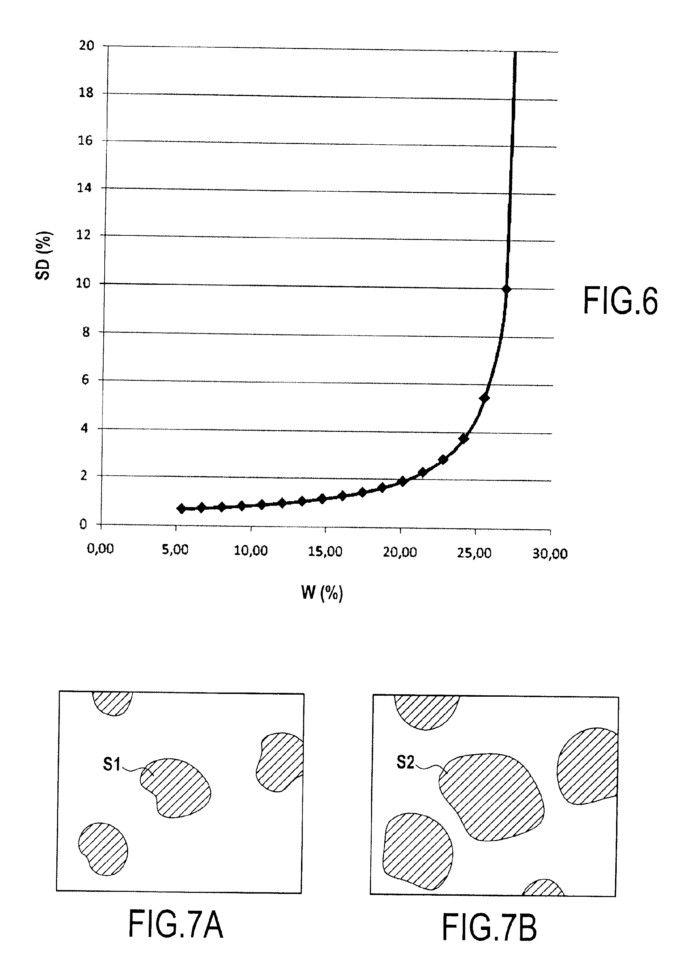

A l'aide des deux familles de données : teneur en eau W, en fonction du taux RH d'humidité relative, et déformation surfacique SD (et donc volume), en fonction du taux RH d'humidité relative, on construit alors la courbe fournissant la déformation surfacique SD en fonction de la teneur en eau W (figure 6).

Il convient maintenant de préciser comment les mesures de déformation surfacique et par suite, les variations de surface et de volume, sont déterminées.

Les figures 7A et 7B présentent de manière schématique deux images obtenues successivement à l'aide du microscope électronique 16, au cours de deux paliers différents.

Comme cela a été indiqué précédemment, dans l'échantillon, on choisit initialement un (éventuellement plusieurs) agrégat dont les déformations vont être mesurées.

Pour mesurer la déformation surfacique de l'agrégat, les images du microscope sont soumises à une analyse d'images au moyen d'un logiciel spécialisé. Celui-ci permet, en définissant le contour des agrégats, de déterminer l'aire et le périmètre des agrégats.

Ainsi, lors du palier correspondant à la figure 7A, la surface occupée par l'échantillon occupe une zone S1 de l'image. A partir de celle-ci, on détermine la surface (également notée S1) occupée par l'agrégat sur le plateau porte-échantillon.

Ensuite, lors des paliers ultérieurs, et notamment le palier auquel correspond la figure 7B, on mesure à nouveau les différentes surfaces $S_i$ occupées respectivement par l'agrégat. On obtient ainsi une suite de surfaces $S_i$ pour les différents taux d'humidité relative correspondant aux différents paliers (par exemple, surface S2 pour le palier de l'image 7B).

En comparaison avec la figure 7A, on constate ainsi que lors du palier de l'image 7B, lors duquel le taux d'humidité relative est supérieur à celle fixée pour le palier de l'image 7A, chacun des agrégats s'est gonflé d'eau. Il s'ensuit pour l'agrégat considéré une augmentation aussi bien de la surface S2 qu'il occupe sur le porte-échantillon que de son volume.

On calcule alors la déformation surfacique de l'agrégat, qui est égale au taux de changement relatif de surface de l'agrégat, lors du palier i, par la formule suivante :

$$\varepsilon_s = \frac{S_i - S_0}{S_0} = \frac{\Delta S}{S_0}$$

Avec $\varepsilon_s$ : déformation surfacique au temps $t_i$ ;
$S_0$ : surface initiale de l'agrégat.

Naturellement, on peut aussi calculer la variation de surface $\Delta S$.

A partir de la variation de surface ou de la déformation surfacique, la déformation volumique peut alors être calculée : La déformation volumique $\varepsilon_v$ est égale à :

$$\varepsilon_v = \alpha \varepsilon_s$$

Le coefficient a, supérieur à 1, est dépendant du degré d'isotropie ou d'anisotropie. Sa valeur est choisie de manière connue en fonction des hypothèses faites sur le matériau. On peut également calculer la variation de volume de l'échantillon, par la formule : $\Delta V = a \, \Delta S$.

**Revendications**

1. Dispositif (10) de caractérisation d'un matériau, le dispositif permettant de déterminer les variations de surface et/ou de volume d'un échantillon (48) du matériau en fonction de sa teneur en eau (W), le dispositif **se caractérisant en ce qu'**il comprend:

   une enceinte (12) ;
   des moyens (22) de régulation du taux d'humidité relative (RH) dans l'enceinte ;
   un appareil de pesage (14), permettant la pesée de l'échantillon à l'intérieur de l'enceinte,
   des moyens (16) d'acquisition d'informations relatives à l'échantillon ; et des moyens (20) de traitement de données, aptes à déterminer des variations de surface et/ou de volume de l'échantillon à partir des informations acquises.

2. Dispositif selon la revendication 1, dans lequel lesdits moyens d'acquisition (16) comportent un microscope électronique, et notamment un microscope électronique à balayage.

3. Dispositif selon la revendication 2, dans lequel la zone d'observation du microscope n'inclut qu'une fraction de l'échantillon.

4. Dispositif selon l'une quelconque des revendications 1 à 3, dans lequel le dispositif (10) comporte en outre un système (30) de régulation de la température.

5. Dispositif selon la revendication 4, dans lequel le système (30) de régulation de la température comporte un module Peltier (35), c'est-à-dire, un module utilisant l'effet Peltier.

6. Dispositif selon l'une quelconque des revendications 1 à 5, dans lequel l'échantillon (48) est fixé à l'extrémité d'un bras (46) de l'appareil de pesage (14), ledit bras étant relié à un dispositif de mesure de couple (42).

7. Dispositif selon l'une quelconque des revendications 1 à 6, prévu pour que l'échantillon (48) soit fixé uniquement à l'appareil de pesage (14).

8. Dispositif selon l'une quelconque des revendications 1 à 7, dans lequel l'enceinte (12) est apte à fonctionner sous très faible pression, à savoir à une pression inférieure à 5000 Pa, voire 2000 Pa.

9. Dispositif selon l'une quelconque des revendications 1 à 8, dans lequel l'appareil présente une incertitude de mesure, pour la mesure de masses, inférieure à 10 mg, voire 2 mg.

**10.** Dispositif selon l'une quelconque des revendications 1 à 9, dans lequel les moyens de traitement de données comportent des moyens pour évaluer une variation de surface de l'échantillon, et des moyens pour déterminer une variation de volume de l'échantillon à partir de sa variation de surface.

**11.** Procédé de caractérisation d'un matériau, permettant de déterminer les variations de volume d'un échantillon (48) du matériau en fonction de sa teneur en eau, **caractérisé en ce qu'**il comporte les étapes suivantes :

   - on dispose l'échantillon dans une enceinte (12) à l'intérieur de laquelle le taux d'humidité relative (RH) peut être commandé ;
   - on fait varier le taux d'humidité relative à l'intérieur de l'enceinte;
   - au cours de ces variations, on pèse l'échantillon et on détermine ses variations de surface ou de volume.

**12.** Procédé selon la revendication 11, dans lequel le taux d'humidité relative est modifié par paliers.

**13.** Procédé selon la revendication 12, dans lequel la durée des paliers est suffisante pour permettre une stabilisation de la masse de l'échantillon.

**14.** Procédé selon l'une quelconque des revendication 11 à 13, dans lequel on opère un séchage de l'échantillon, suivi ou précédé par une humidification.

**15.** Procédé selon la revendication 14, dans lequel, dans une étape initiale, on place l'échantillon (48) à un taux d'humidité relative égal à celui régnant dans la pièce dans laquelle a lieu l'essai.

FIG.1

EP 2 397 835 A1

FIG.2

FIG.3

FIG.4

FIG.5

FIG.6

FIG.7A

FIG.7B

Europäisches
Patentamt

European
Patent Office

Office européen
des brevets

**RAPPORT DE RECHERCHE EUROPEENNE**

Numéro de la demande

EP 11 16 9714

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 344 465 A2 (MITSUBISHI HEAVY IND LTD [JP]; CHUBU ELECTRIC POWER [JP]) 6 décembre 1989 (1989-12-06) * abrégé; figure 1 * * colonne 4, ligne 46 - colonne 5, ligne 12 * * colonne 5, ligne 32 - ligne 34 * * colonne 6, ligne 4 - ligne 28 * ----- | 1 | INV. G01N5/04 |
| Y | "COMPUTERIZED THERMOGRAVIMETRIC REACTOR WITH VIDEO MICROSCOPY IMAGING SYSTEM FOR COAL PYROLYSIS AND COMBUSTION STUDIES", REVIEW OF SCIENTIFIC INSTRUMENTS, AIP, MELVILLE, NY, US, vol. 64, no. 6, 1 juin 1993 (1993-06-01), pages 1541-1548, XP000380689, ISSN: 0034-6748, DOI: DOI:10.1063/1.1144024 * le document en entier * ----- | 1-15 | |
| A | LEE JUNGCHUL ET AL: "Microthermogravimetry using a microcantilever hot plate with integrated temperature-compensated piezoresistive strain sensors", REVIEW OF SCIENTIFIC INSTRUMENTS, AIP, MELVILLE, NY, US, vol. 79, no. 5, 6 mai 2008 (2008-05-06), pages 54901-54901, XP012115405, ISSN: 0034-6748, DOI: DOI:10.1063/1.2913337 * abrégé; figure 2 * * pages 054901-2, colonne 2, dernier alinéa - pages 054901-3, colonne 1, alinéa 1 * * V. Summary * ----- -/-- | 1-15 | DOMAINES TECHNIQUES RECHERCHES (IPC) G01N |

Le présent rapport a été établi pour toutes les revendications

| Lieu de la recherche | Date d'achèvement de la recherche | Examinateur |
|---|---|---|
| La Haye | 9 septembre 2011 | Bockstahl, Frédéric |

EPO FORM 1503 03.82 (P04C02)

Europäisches
Patentamt

European
Patent Office

Office européen
des brevets

# RAPPORT DE RECHERCHE EUROPEENNE

Numéro de la demande

EP 11 16 9714

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | HIRANUMA ET AL: "Using environmental scanning electron microscopy to determine the hygroscopic properties of agricultural aerosols", ATMOSPHERIC ENVIRONMENT, PERGAMON, GB, vol. 42, no. 9, 14 janvier 2008 (2008-01-14), pages 1983-1994, XP022494095, ISSN: 1352-2310, DOI: DOI:10.1016/J.ATMOSENV.2007.12.003 * figures 1,2 * * page 1985, colonne 2, alinéa 1 * * page 1986, colonne 1, dernier alinéa - colonne 2, dernière ligne * ----- | 1-15 | |
| A | SORGI ET AL: "Analyse microstructurale au MEB environnemental d'une craie soumise a chargement hydrique et mecanique", COMPTES RENDUS - GEOSCIENCE, ELSEVIER, PARIS, FR, vol. 339, no. 7, 6 août 2007 (2007-08-06), pages 468-481, XP022183977, ISSN: 1631-0713, DOI: DOI:10.1016/J.CRTE.2007.06.003 * 3. Le MEB environnemental pages 473 - 474 * * 5. Conclusions et perspectives page 480 * ----- | 1-15 | |
| A | IERVOLINO E ET AL: "Thermogravimetric device with integrated thermal actuators", MICRO ELECTRO MECHANICAL SYSTEMS (MEMS), 2010 IEEE 23RD INTERNATIONAL CONFERENCE ON, IEEE, PISCATAWAY, NJ, USA, 24 janvier 2010 (2010-01-24), pages 683-686, XP031655036, ISBN: 978-1-4244-5761-8 * abrégé; figures 1,3 * ----- | 1-15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 9 septembre 2011 | Bockstahl, Frédéric |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 16 9714

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-09-2011

| Document brevet cité au rapport de recherche | | Date de publication | Membre(s) de la famille de brevet(s) | | Date de publication |
|---|---|---|---|---|---|
| EP 0344465 | A2 | 06-12-1989 | DE | 68904355 D1 | 25-02-1993 |
| | | | DE | 68904355 T2 | 29-07-1993 |
| | | | JP | 1282464 A | 14-11-1989 |
| | | | US | 4964734 A | 23-10-1990 |

EPO FORM P0460

Pour tout renseignement concernant cette annexe : voir Journal Officiel de l'Office européen des brevets, No.12/82